# EUROPÄISCHE PATENTSCHRIFT

(11) **EP 3 077 701 B1**
(45) Veröffentlichungstag und Bekanntmachung des Hinweises auf die Patenterteilung: **15.05.2019**
(21) Anmeldenummer: 14815605.2
(22) Anmeldetag: 05.12.2014
(51) Int. Cl.: F16F 9/05

(54) **LUFTFEDERANORDNUNG**
AIR SPRING ARRANGEMENT
ENSEMBLE RESSORT PNEUMATIQUE

(30) Priorität: 05.12.2013 DE 102013113577; 22.10.2014 DE 102014115392
(43) Veröffentlichungstag der Anmeldung: 12.10.2016
(73) Patentinhaber: Vibracoustic CV Air Springs GmbH, 20099 Hamburg (DE)
(72) Erfinder: DEHLWES, Stephan, 22844 Norderstedt (DE); WEBER, Michael, 21244 Buchholz (DE)
(74) Vertreter: Flügel Preissner Schober Seidel
(86) Internationale Anmeldenummer: PCT/EP2014/076750
(87) Internationale Veröffentlichungsnummer: WO 2015/082695

(56) Entgegenhaltungen:
- EP-A1- 1 596 093
- WO-A1-98/46370
- WO-A1-2013/003844
- DE-A1- 10 060 824
- DE-A1-102012 103 358

## Beschreibung

Die vorliegende Erfindung betrifft eine Luftfederanordnung, insbesondere für ein Nutzfahrzeug.

Luftfederanordnungen finden als Luftfedern in Kraftfahrzeugen Verwendung. Sie dienen der Abfederung zweier zueinander beweglicher Fahrzeugteile, aber auch zur Veränderung der Niveaulage eines Fahrzeugs. Derartige Luftfederanordnungen weisen gewöhnlich einen Luftfederbalg aus einem Verbundmaterial von verschiedenen Gummimaterialien und Festigkeitsträgern auf. Der Luftfederbalg ist im entspannten Zustand im Wesentlichen zylinderförmig und ist mit einem oberen Abschlusselement, auch Deckel genannt, sowie mit einem Abrollkolben verbunden, um einen luftdicht abgeschlossenen Arbeitsraum zu bilden. Bei Ein- und Ausfedervorgängen rollt der Rollbalg an einer Außenfläche des Abrollkolbens ab. Eine Luftfeder kann darüber hinaus eine Dämpfungsfunktion aufweisen und wird in diesem Fall als Luftfederdämpfer bezeichnet.

Sofern die Luftfederanordnung im Bereich des Fahrwerks verwendet wird, ist sie Umwelteinflüssen ausgesetzt. Dazu gehören neben Wind, Wasser und Schmutz auch der Einschlag von während der Fahrt aufgewirbelten Gegenständen in die Luftfederanordnung, beispielsweise von Steinen oder Split (Steinschlag). Die durch diese Gegenstände verursachte mechanische Beschädigung kann die Bauteile zerstören oder zumindest ihre Lebensdauer reduzieren. Dies ist insbesondere dann problematisch, wenn die Bauteile aus wenig schlagfesten Materialien, beispielsweise aus hartem Kunststoff und/oder höherfestem Kunststoffmaterial, gefertigt sind.

Gewöhnlich wird Steinschlag dadurch begegnet, dass die gefährdeten Bauteile mit vergrößerter Wandstärke ausgeführt werden. Wasser, Matsch und Schmutz werden derzeit durch zusätzliche Schutzmanschetten von den Luftfederanordnungen ferngehalten.

DE 10 2012 103 358 A1 offenbart eine Luftfederanordnung mit den Merkmalen des Oberbegriffs des Anspruchs 1.

Die vorliegende Erfindung beruht auf der **Aufgabe,** eine Luftfederanordnung der eingangs genannten Art derart weiterzubilden, dass ihre mechanische Widerstandfähigkeit gegen einschlagende Gegenstände erhöht wird.

Zur **Lösung** dieser Aufgabe wird gemäß der Erfindung eine Luftfederanordnung gemäß Anspruch 1 mit einer Mehrzahl von Bauteilen vorgeschlagen, bei der wenigstens eines der Bauteile eine Schutzeinrichtung zum Schutz des Bauteils vor mechanischer Beschädigung durch Einschlag von Gegenständen aufweist, wobei die Schutzeinrichtung wenigstens einen Bereich einer zu schützenden Oberfläche des Bauteils bedeckt und wenigstens teilweise an der Oberfläche anliegt.

Die Erfindungsgemäße Luftfederanordnung hat gegenüber den bisher bekannten Luftfederanordnungen den Vorteil, dass für die durch die Schutzeinrichtung geschützten Bauteile keine erhöhte oder nur eine leicht erhöhte Wandstärke benötigt wird. Dadurch wird gegenüber einem Bauteil, das einen Schutz gegen Steinschlag dadurch implementiert, dass die Wandstärke stark vergrößert wird, Material, insbesondere für den Schutz gegen Steinschlag notwendiges hochfestes Material, eingespart. Darüber hinaus wird das Gewicht der Bauteile reduziert.

Vorteilhafte Ausgestaltungen der Erfindung sind Gegenstand der Unteransprüche.

Die Schutzeinrichtung weist erfindungsgemäß eine Vielzahl von Opferrippen auf, die von der Oberfläche des Bauteils abragen. Derartige Opferrippen lassen sich gegebenenfalls bei der Herstellung des Bauteils in die Oberfläche des Bauteils integrieren, beispielsweise beim Gießen von Kunststoff. Die Opferrippen können zueinander parallel angeordnet sein. Die Anordnung kann von einer Schutzorientierung im Fahrzeug abhängig sein. Dadurch werden besonders gleichmäßige Eigenschaften der Schutzeinrichtung erreicht.

Die Schutzeinrichtung kann eine strukturierte Oberfläche aufweisen. Die Struktur dieser Oberfläche lässt sich insbesondere bereichsweise an die Belastung durch mechanische Schläge anpassen, die in einzelnen Bereichen der Oberfläche zu erwarten ist.

Vorteilhaft kann die Schutzeinrichtung eine Beschichtung aufweisen. Eine derartige Beschichtung kann verhindern, dass die Oberfläche des Bauteils verletzt und dadurch der Weg zu weiteren Beschädigungen geebnet wird.

Die Schutzeinrichtung kann darüber hinaus eine Folie, insbesondere eine Kunststofffolie, aufweisen. Durch eine derartige Folie wird Energie von mechanischen Schlägen wenigstens teilweise absorbiert und nicht an die Oberfläche des darunter liegenden Bauteils weitergegeben.

Erfindungsgemäß weist die Schutzeinrichtung eine schmutz- oder wasserabweisende Schicht als äußerste Schicht auf. Dadurch wird zusätzlich die Anhaftung von Schmutz und Eis reduziert.

Die Schutzeinrichtung kann vorteilhaft auf einer Abrollfläche eines Abrollkolbens und/oder auf einer Außenfläche eines Zusatzvolumens der Luftfederanordnung angeordnet sein. Diese Flächen sind bei einem Einbau in ein Nutzfahrzeug besonders exponiert. Daher sind hier die Auswirkungen einer Schutzeinrichtung am größten.

Die Schutzeinrichtung kann mit der Außenfläche eines der Bauteile integral ausgebildet sein. Eine integrierte Schutzeinrichtung kann beispielsweise durch Umspritzen erhalten werden. Eine derartige integrale Verbindung bewirkt eine verbesserte Verankerung der Schutzeinrichtung in beziehungsweise an der Außenfläche.

In einer weiteren Ausgestaltung der Erfindung kann die Schutzeinrichtung aus einem anderen Material als einem Basismaterial des Bauteils gebildet sein, auf dessen Oberfläche sie angeordnet ist. Dadurch kann das jeweils für die Tragfunktion und die Schutzfunktion am besten geeignete Material ausgewählt werden.

Die Erfindung wird nachfolgend anhand von Ausführungsbeispielen näher erläutert, die in den beigefügten Zeichnungen schematisch dargestellt sind. Es zeigen:
- Fig. 1: eine schematische Ansicht einer Luftfederanordnung;
- Fig. 2: eine schematische Querschnittsdarstellung einer Luftfederanordnung;
- Fig. 3: ein schematisches Detail gemäß Ausschnitt A aus Fig. 2 gemäß einer ersten Ausführungsform der Erfindung;
- Fig. 4: ein schematisches Detail gemäß Ausschnitt A aus Fig. 2 gemäß einer zweiten Ausführungsform der Erfindung;
- Fig. 5: eine Seitenansicht auf einen Abrollkolben einer Luftfederanordnung gemäß einer dritten Ausführungsform der Erfindung;
- Fig. 6: eine Ansicht gemäß Detail B aus Fig. 5;
- Fig. 7: eine Seitenansicht auf einen Abrollkolben einer Luftfederanordnung gemäß einer vierten Ausführungsform der Erfindung;
- Fig. 8: eine Ansicht gemäß Detail C aus Fig. 7;
- Fig. 9: ein schematisches Detail eines Querschnitts durch eine Oberfläche der Luftfederanordnung aus Fig. 2 gemäß einer fünften Ausführungsform der Erfindung;
- Fig. 10: ein schematisches Detail wie in Fig. 9 gemäß einer sechsten Ausführungsform der Erfindung;
- Fig. 11: ein schematisches Detail wie in Fig. 9 gemäß einer sechsten Ausführungsform der Erfindung;
- Fig. 12: ein schematisches Detail wie in Fig. 9 gemäß einer siebten Ausführungsform der Erfindung;
- Fig. 13: ein schematisches Detail wie in Fig. 9 gemäß einer achten Ausführungsform der Erfindung und
- Fig. 14: ein schematisches Detail wie in Fig. 9 gemäß einer neunten Ausführungsform der Erfindung.

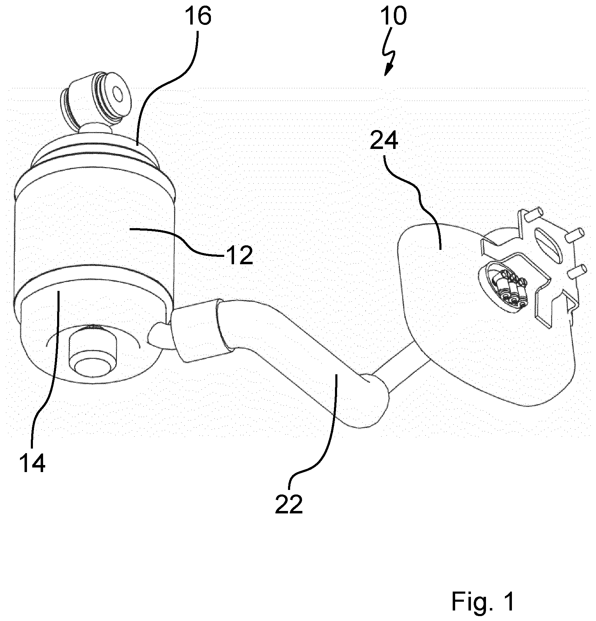

Eine Luftfederanordnung 10, wie sie in Fig. 1 gezeigt ist, weist einen Luftfederbalg 12 auf, der einerseits an einem Abrollkolben 14 und andererseits an einem Deckel 16 befestigt ist. An dem Deckel 16 und dem Abrollkolben 14 ist jeweils ein nicht gezeigtes zu lagerndes Bauteil eines Kraftfahrzeugs angeschlossen, beispielsweise Teile einer Radaufhängung. Der Abrollkolben 14 ist mittels einer Rohrleitung 22 mit einem Zusatzvolumen 24 verbunden. Fig. 1 zeigt die Luftfederanordnung 10 von unten, also so, wie sie von einer Straßenoberfläche sichtbar wäre. Von unmittelbarem Steinschlag in dieser Anordnung gefährdete Bauteile sind der Luftfederbalg 12, der Abrollkolben 14, die Rohrleitung 22 und das Zusatzvolumen 24. Der Deckel 16 ist tendenziell indirektem Steinschlag ausgesetzt, also Gegenständen, die von anderen Teilen der Luftfederanordnung 12 oder des Kraftfahrzeugs bereits einmal abgeprallt sind.

Die tatsächliche Gefahr eines Steinschlags auf diesen Teilen richtet sich selbstverständlich nach der jeweils konkreten Anordnung der Luftfederanordnung 10 in oder an dem Kraftfahrzeug.

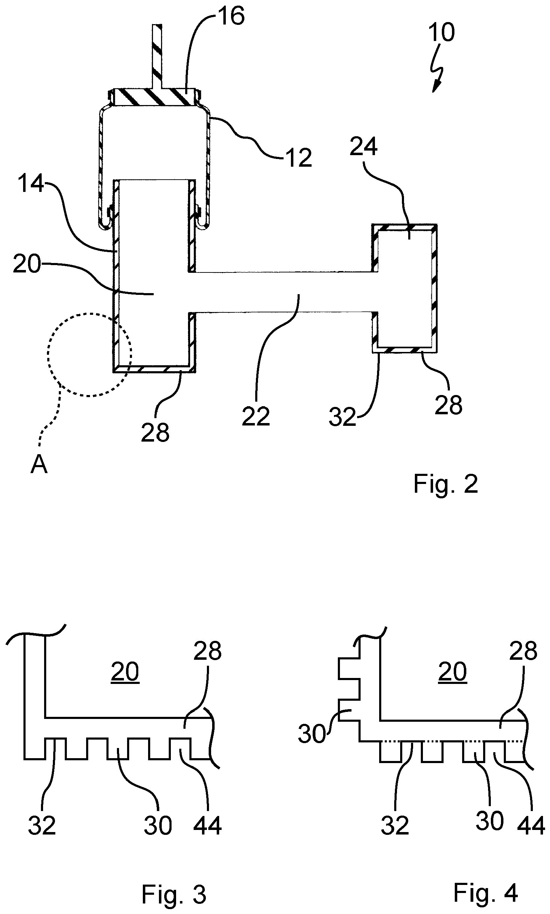

Wie in Fig. 2 gezeigt, sind der Abrollkolben 14 sowie der Deckel 16 hohl, so dass die hohlen Innenräume des Abrollkolbens 14, des Deckels 16 und des Luftfederbalgs 12 gemeinsam eine Luftkammer 20 bilden.

Der Abrollkolben 14, der Deckel 16, die Rohrleitung 22 und das Zusatzvolumen 24 weisen Außenwände 28 auf, die jeweils aus einem Basismaterial, beispielsweise einem harten Kunststoff oder einem Kunststoffverbundwerkstoff, insbesondere Kunststoff mit eingebetteten Glasfasern, gefertigt sein können, das den in der Luftkammer 20 auftretenden Drücken standhalten kann. Derartiger Kunststoff ist zu einem gewissen Grad spröde, so dass auf einer außenliegenden Oberfläche 32 aufschlagende Gegenstände, sofern sie eine ausreichende Energie aufweisen, Beschädigungen verursachen können.

In der vorliegenden Ausführungsform weisen der Abrollkolben 14, der Deckel 16 und das Zusatzvolumen 24 Außenwände 28 aus einem harten Kunststoff auf. Der Luftfederbalg 12 sowie die Rohrleitung 22 sind aus flexiblen Materialien gefertigt, die in ausreichendem Maße elastisch sind, um einen Steinschlag abzufangen.

Die in Fig. 3 gezeigte Außenwand 28 des Abrollkolbens 14 weist gemäß einer ersten Ausführungsform eine Schutzeinrichtung in Form von Opferrippen 30 auf. Die Opferrippen 30 sind an der außenseitigen Oberfläche 32 des Abrollkolbens 14 parallel zueinander angeordnet und jeweils voneinander durch Nuten 44 beabstandet. Die Opferrippen 30 erstrecken sich bei dieser Ausführungsform lediglich über eine der Oberflächen 32.

Die Opferrippen 30 sind mit der Außenwand 28 einstückig und werden beim Gießen oder Spritzen des Abrollkolbens 14 in demselben Arbeitsschritt hergestellt, so dass keine zusätzlichen Arbeiten notwendig sind.

Bei der in Fig. 4 gezeigten zweiten Ausführungsform sind nicht nur an einer, sondern an allen Außenwänden 28 des Abrollkolbens 14 Opferrippen 30 vorgesehen.

Darüber hinaus sind einige der Opferrippen 30 in einem separaten Arbeitsschritt auf die Oberfläche 32 aufgebracht worden. Dies vereinfacht es, ein anderes Material als das Basismaterial zu verwenden, welches für die Außenwand 28 verwendet wurde. Selbstverständlich ist es in alternativer Ausgestaltung dieser Ausführungsform möglich, alle Opferrippen 30 einstückig mit den Außenwänden 28 zu erstellen.

Wenn ein Gegenstand, beispielsweise ein Stein, auf eine der Außenwände 28 des Abrollkolbens 14 aufschlägt, wird er zunächst auf eine der Opferrippen 30 treffen und diese zusammendrücken oder gegebenenfalls beschädigen. Durch die Verformung der von dem Einschlag betroffenen Opferrippen 30 wird die Bewegungsenergie des Gegenstands von diesen weitgehend aufgenommen. Sofern der Gegenstand danach noch mit der Oberfläche 32 in Kontakt kommt, wird er dort keine wesentlichen Beschädigungen der Außenwand 28 mehr verursachen. Die Opferrippen 30 sind lediglich zum Dämpfen von Einschlägen vorgesehen und für die Funktion des Abrollkolbens 14 beziehungsweise des Bauteils, auf dem sie angebracht sind, nicht wesentlich.

Gewöhnlich wird eine Wandstärke der Außenwände 28 erhöht, um eine bessere Festigkeit gegen Einschläge von Gegenständen, insbesondere gegen Steinschlag zu erreichen. Im Gegensatz dazu schirmen die Opferrippen 30 die Oberfläche 32 gegenüber Steinschlägen ab, so dass die Außenwand 28 mit einer geringeren Wandstärke ausgeführt werden kann, weil sie nicht steinschlagfest sein muss. Gegenüber der herkömmlichen Bauweise wird dadurch Material eingespart.

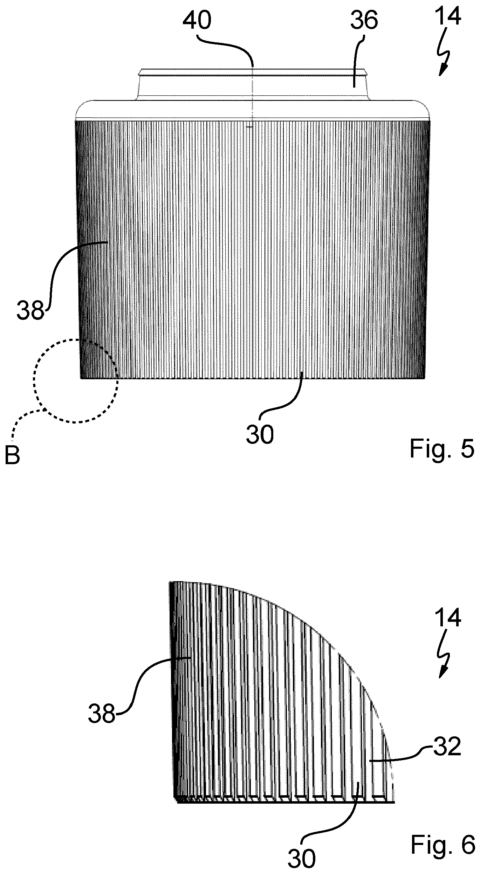

Der in den Fig. 5 und 6 gezeigte Abrollkolben 14 weist eine Abrollfläche 38 mit zu einer Achse 40 im Wesentlichen rotationssymmetrischer Oberfläche 32 auf. Die Abrollfläche 38 ist oftmals im Bereich der Radaufhängung eines Kraftfahrzeugs angeordnet und dadurch Einschlägen von Gegenständen ausgesetzt, die von den Reifen des Kraftfahrzeugs hochgeschleudert werden. Die als Schutzeinrichtung an der Oberfläche 32 der Abrollfläche 38 vorgesehenen Opferrippen 30 sind nicht rotationssymmetrisch ausgebildet, sondern erstrecken sich entlang der Oberfläche 32 in axialer Richtung.

Ein Kragenabschnitt 36, der gewöhnlich der Festlegung des Luftfederbalgs 12 dient und dadurch von diesem abgedeckt und nicht dem Risiko von Steinschlag ausgesetzt ist, weist keine Opferrippen 30 auf.

Die Opferrippen 30, die in Fig. 6 im Detail gezeigt sind, sind im Wesentlichen parallel zueinander und voneinander beabstandet angeordnet. In dem vorliegenden Beispiel ist die Abrollfläche 38 nicht zylindrisch ausgebildet. Stattdessen ist ein Durchmesser der Abrollfläche 38 an der Seite, an welcher der Kragenabschnitt 36 anschließt, größer als an einer axial gegenüberliegenden Seite. Dadurch sind auch die Opferrippen 30 nicht vollständig parallel zu der Achse 40.

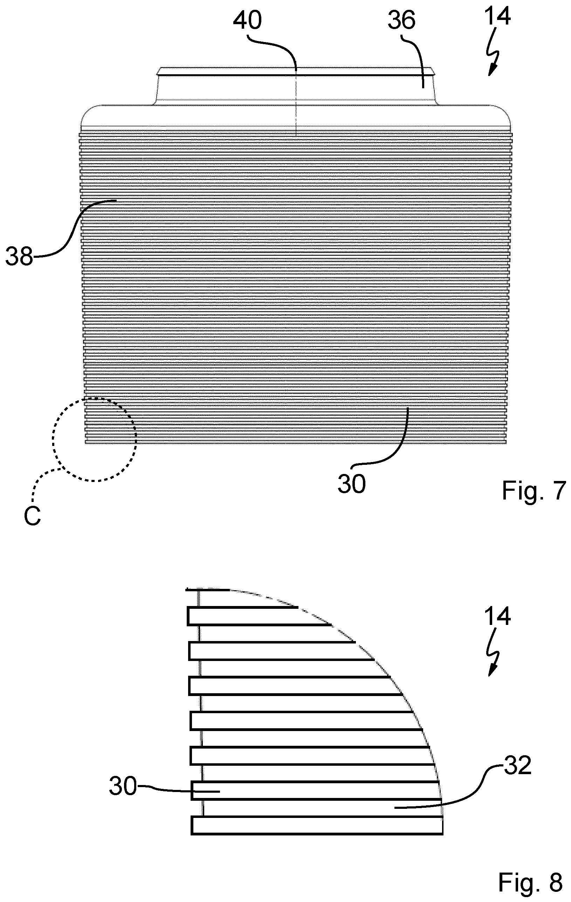

Die Ausführungsform gemäß Fig. 7 und 8 entspricht im Wesentlichen der Ausführungsform der Fig. 5 und 6. Die Opferrippen 30 sind auch hier an der Abrollfläche 38 angeordnet, erstrecken sich allerdings in Umfangsrichtung des Abrollkolbens 14. Somit ist die Abrollfläche 38 mit den Opferrippen 30 weitgehend zu der Achse 40 rotationssymmetrisch.

In diesen Ausführungsbeispielen ragen die Opferrippen 30 senkrecht von den Oberflächen 32, 38 ab. Die Opferrippen 30 können darüber hinaus auch gegenüber der Senkrechten geneigt sein. Die Opferrippen 30 liegen mit einem Basisabschnitt vollständig an den Oberflächen 32, 38 an. Dies kann sich bei den hier gezeigten Ausführungsformen bereits dadurch ergeben, dass die Opferrippen 30 mit dem Bauteil, für das sie die Schutzeinrichtung bilden, einstückig sind.

Um die Herstellung zu vereinfachen ist es bevorzugt, die Opferrippen 30 derart auszugestalten, dass sie nach dem Gießen oder Spritzen zusammen mit dem Bauteil, auf dem sie angeordnet sind, gut entformbar sind.

Je nach erwarteter Belastung können die Opferrippen 30 eine Höhe zwischen 0,1 und 3 mm aufweisen. Regelmäßig wird eine Höhe zwischen 1 und 1,5 mm bevorzugt.

Gewöhnlich entspricht die Breite der Opferrippen 30 dem Abstand der Opferrippen 30 zueinander. Es kann jedoch zweckmäßig sein, Opferrippen 30 mit einem Verhältnis von Breite zu Abstand von 0,1 bis 10 zu verwenden.

In dem vorliegenden Ausführungsbeispiel entspricht die Höhe der Opferrippen 30 der Breite der Opferrippen 30. Das Verhältnis von Breite zu Höhe der Opferrippen 30 kann ebenfalls zwischen 0,1 und 10 variiert werden.

Sofern die Opferrippen 30 aus dem Basismaterial der Außenwand 28 bestehen, können sie zusammen mit dem restlichen Bauteil gegossen oder gespritzt werden. Es ist allerdings ebenso denkbar, zunächst das Bauteil ohne die Schutzeinrichtung zu erstellen und die Schutzeinrichtung anschließend aufzubringen. Schutzeinrichtungen, insbesondere wenn die nicht aus dem Basismaterial der Außenwand 28 bestehen, können auch in einer Form zum Gießen oder Spritzen des Bauteils angeordnet und dann bei der Herstellung des Bauteils umgossen oder umspritzt werden.

In einer weiteren Ausführungsform kann die Schutzeinrichtung als strukturierte Oberfläche ausgebildet sein. Eine derartige strukturierte Oberfläche weist eine Vielzahl von Erhebungen und Vertiefungen auf, die etwaige Gegenstände abfangen, bevor diese auf die Außenwand eines Bauteils treffen.

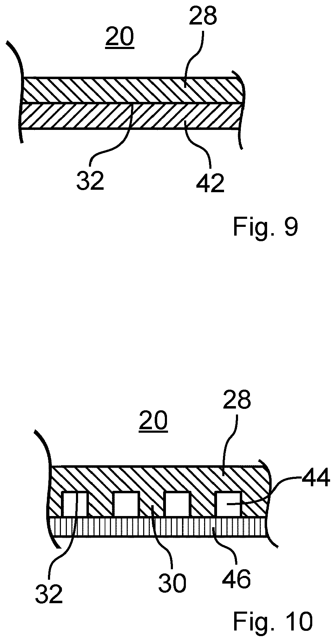

Bei der in der Fig. 9 gezeigten Ausführungsform weist die Außenwand 28 eine Schutzeinrichtung 42 in Form einer Lackierung mit einem schlagfesten Material auf. Eine derartige Lackierung 42 kann beispielsweise durch Tauchlackieren oder durch Aufsprühen auf eine Oberfläche 32 eines Bauteils gebildet werden. Eine derartige Lackierung oder Beschichtung kann auch beispielsweise beim Druckgießen in der Form vorgesehen werden.

Des Weiteren kann die Schutzeinrichtung eine Folie 46, wie sie in Fig. 10 gezeigt ist, insbesondere eine Kunststofffolie mit elastischen Eigenschaften, aufweisen. In diesem Fall wird die Oberfläche 32 des Bauteils bzw. die darauf angeordneten Opferrippen 30 nach der Herstellung mit der Folie 46 beklebt.

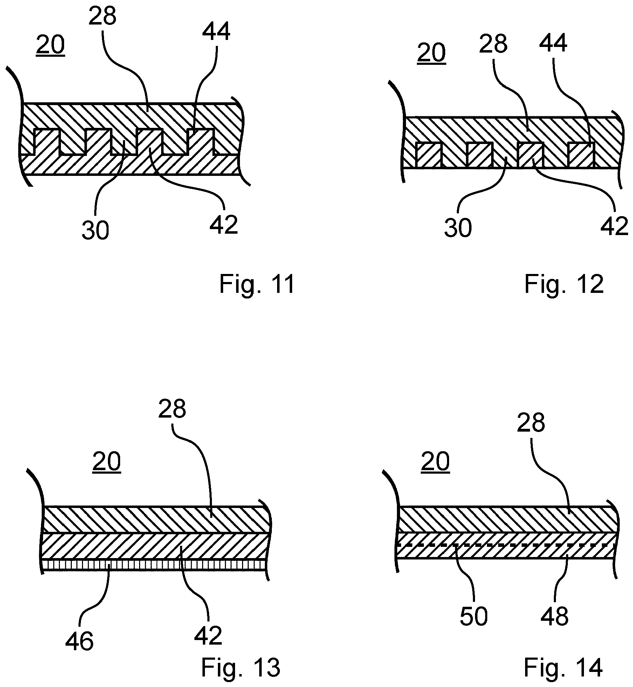

Es ist auch möglich, die Schutzeinrichtung mehrschichtig auszugestalten und verschiedene der oben genannten Schutzeinrichtungen 30, 42, 46 zu kombinieren. So ist es beispielsweise möglich, Opferrippen 30 an einem Bauteil vorzusehen und die Opferrippen 30 mit einem schlagfesten Material zu überziehen, das auch die Nuten 44 ausfüllt, wie in Fig. 11 gezeigt.

Ebenso ist es, wie in Fig. 12 gezeigt, möglich, lediglich die Nuten 44 mit einem anderen Material - beispielsweise einem elastischen oder auf andere Weise schlagfesten Material - zu füllen. Dadurch stützt das Material in den Nuten 44 zusätzlich die Opferrippen 30 ab, so dass insgesamt eine höhere Stabilität erreicht wird.

Um das Anhaften von Eis und Schmutz an einem Bauteil zu verhindern, kann jede beliebige Schutzeinrichtung 30, 42, 46 zusätzlich eine schmutz- und/oder wasserabweisende Schicht aufweisen. Diese Schicht ist zweckmäßigerweise die äußerste Schicht und somit unmittelbar Wind und Wetter ausgesetzt.

Die Ausführungsform aus Fig. 13 weist diese Schicht in Form einer schmutz- und wasserabweisenden Folie 46 auf.

Die in Fig. 14 gezeigte neunte Ausführungsform weist als Schutzeinrichtung eine Kunststoffschicht 48 auf, die beispielsweise aus dem Basismaterial der Außenwand 28 gebildet ist. Um die Schlagfestigkeit der Kunststoffschicht 48 zu erhöhen, ist ein Stahlgitter 50 nahe an einer Oberfläche dieser Schicht eingebettet, das bei der Herstellung der Kunststoffschicht 48 umspritzt wird. Statt eines Stahlgitters 50 sind beliebige vorgefertigte Verstärkungseinrichtungen aus beliebigen Materialien einsetzbar, die sich umspritzen und gut in den Fertigungsprozess integrieren lassen.

Opferrippen 30 können eine beliebige Ausrichtung relativ zu dem Bauteil, auf dem sie angebracht sind, aufweisen. Opferrippen 30 können sich auch schneiden und so beispielsweise diagonale oder gekreuzte Muster bilden.

Um die Haltbarkeit und Stabilität der Schutzeinrichtungen 30, 42, 46 zu verbessern kann es vorteilhaft sein, dass die Schutzeinrichtungen 30, 42, 46 vollständig an den Oberflächen 32 anliegen.

Der Abrollkolben 14, der Deckel 16, die Rohrleitung 22 und das Zusatzvolumen 24 sind Bauteile der Luftfederanordnung 10. Eine Luftfederanordnung 10 kann alle diese Bauteile aufweisen. Es ist auch möglich, Luftfederanordnungen 10 zu erstellen, die eines oder mehrere dieser Bauteile nicht aufweisen. Darüber hinaus ist es möglich, dass die Luftfederanordnung 10 weitere Bauteile aufweist. Jedes der Bauteile kann eine Schutzeinrichtung 30, 42, 46 aufweisen. Darüber hinaus können für jedes der Bauteile unterschiedliche Schutzeinrichtungen 30, 42, 46 in unterschiedlichen Kombinationen verwendet werden.

Die Schutzeinrichtungen 30, 42, 46 können auf beliebigen Abschnitten von Oberflächen 32 der Bauteile angeordnet sein. Insbesondere kann in Abschnitten der Oberflächen 32, die durch andere Maßnahmen vor Steinschlägen geschützt sind, auf Schutzeinrichtungen 30, 42, 46 verzichtet werden. In diesem Fall werden nur die Abschnitte der Oberflächen 32 mit Schutzeinrichtungen 30, 42, 46 versehen, bei denen ein Steinschlagrisiko besteht.

Die erfindungsgemäße Luftfederanordnung 10 erlaubt es, bei ihrer Herstellung Material einzusparen und dennoch einen guten Schutz gegen Steinschlag und sonstige mechanische Beschädigung zu erreichen.

### Bezugszeichenliste

- 10: Luftfederanordnung
- 12: Luftfederbalg
- 14: Abrollkolben
- 16: Deckel
- 20: Luftkammer
- 22: Rohrleitung
- 24: Zusatzvolumen
- 28: Außenwand
- 30: Opferrippe (Schutzeinrichtung)
- 32: Oberfläche
- 36: Kragenabschnitt
- 38: Abrollfläche
- 40: Achse
- 42: Lackierung (Schutzeinrichtung)
- 44: Nut
- 46: Folie (Schutzeinrichtung)
- 48: Kunststoffschicht (Schutzeinrichtung)
- 50: Stahlgitter (Verstärkungseinrichtung)

## Patentansprüche

1. Luftfederanordnung (10), insbesondere für ein Nutzfahrzeug,
wobei wenigstens ein Bauteil (12, 14, 16, 24) der Luftfederanordnung (10) eine Schutzeinrichtung (30, 42, 46) zum Schutz des Bauteils (12, 14, 16, 24) vor mechanischer Beschädigung durch Einschlag von Gegenständen aufweist,
wobei die Schutzeinrichtung (30, 42, 46) wenigstens einen Bereich einer zu schützenden Oberfläche (32) des Bauteils (12, 14, 16, 24) bedeckt und wenigstens teilweise an der Oberfläche (32) anliegt, wobei die Schutzeinrichtung als äußerste Schicht eine schmutz- oder wasserabweisende Schicht aufweist
**dadurch gekennzeichnet, dass**
die Schutzeinrichtung eine Vielzahl von Opferrippen (30) aufweist, die von der Oberfläche (32) abragen.

2. Luftfederanordnung gemäß Anspruch 1, **dadurch gekennzeichnet, dass** die Opferrippen (30) zueinander in Wesentlichen parallel angeordnet sind.

3. Luftfederanordnung gemäß einem der voranstehenden Ansprüche, **dadurch gekennzeichnet, dass** die Schutzeinrichtung eine strukturierte Oberfläche aufweist.

4. Luftfederanordnung gemäß einem der voranstehenden Ansprüche, **dadurch gekennzeichnet, dass** die Schutzeinrichtung eine Lackierung (42) aus einem schlagfesten und/oder elastischen Material aufweist.

5. Luftfederanordnung gemäß einem der voranstehenden Ansprüche, **dadurch gekennzeichnet, dass** die Schutzeinrichtung eine Folie (46) aus einem schlagfesten und/oder elastischen Material aufweist.

6. Luftfederanordnung gemäß einem der voranstehenden Ansprüche, **dadurch gekennzeichnet, dass** die Schutzeinrichtung auf einer Abrollfläche (38) eines Abrollkolbens (14) angeordnet ist.

7. Luftfederanordnung gemäß einem der voranstehenden Ansprüche, **dadurch gekennzeichnet, dass** die Schutzeinrichtung auf einer Oberfläche (32) eines Zusatzvolumens (24) der Luftfederanordnung (10) angeordnet ist.

8. Luftfederanordnung gemäß einem der voranstehenden Ansprüche, **dadurch gekennzeichnet, dass** die Schutzeinrichtung mit der Außenfläche (28) eines der Bauteile (12, 14, 16, 24) integral ausgebildet ist.

9. Luftfederanordnung gemäß einem der voranstehenden Ansprüche, **dadurch gekennzeichnet, dass** die Schutzeinrichtung aus einem anderen Material als einem Basismaterial des Bauteils (12, 14, 16, 24) gebildet ist, auf dessen Oberfläche (32) sie angeordnet ist.

## Claims

1. Air spring assembly (10), in particular for a commercial vehicle,
wherein at least one component (12, 14, 16, 24) of the air spring assembly (10) has a protective device (30, 42, 46) for protecting the component (12, 14, 16, 24) from mechanical damage by impact of objects,
wherein the protective device (30, 42, 46) covers at least one region of a protective surface (32) of the component (12, 14, 16, 24) and at least is partially in contact with the surface (32),
wherein the protective device is provided with a dirt-repellent or water-repellent outer layer,
**characterised in that** the protective means comprises a plurality of sacrificial ribs (30) which project from of the surface (32).

2. Air spring assembly according to claim 1, **characterised in that** the sacrificial ribs (30) are arranged substantially parallel to one another.

3. Air spring assembly according to any one of the preceding claims, **characterised in that** the protective device has a structured surface.

4. Air spring assembly according to any one of the preceding claims, **characterised in that** the protective device comprises a paint finish (42) of an impact-resistant and/or resilient material.

5. Air spring assembly according to any one of the preceding claims, **characterised in that** the protective device comprises a foil (46) of an impact-resistant and/or resilient material.

6. Air spring assembly according to any one of the preceding claims, **characterised in that** the protective device is arranged on a rolling surface (38) of a rolling piston (14).

7. Air spring assembly according to any one of the preceding claims, **characterised in that** the protective device is arranged on a surface (32) of an additional volume (24) of the air spring assembly (10).

8. Air spring assembly according to any one of the preceding claims, **characterised in that** the protective device is integrally formed with the outer surface (28) of one of the components (12, 14, 16, 24).

9. Air spring assembly according to any one of the preceding claims, **characterised in that** the protective device is formed from a material other than a base material of the component (12, 14, 16, 24) on the surface (32) of which it is arranged.

## Revendications

1. Agencement de ressort pneumatique (10), en particulier pour un véhicule utilitaire,
dans lequel au moins un composant (12, 14, 16, 24) de l'agencement de ressort pneumatique (10) comprend un organe protecteur (30, 42, 46) pour protéger le composant (12, 14, 16, 24) vis-à-vis des endommagements mécaniques par impact d'objets,
dans lequel l'organe protecteur (30, 42, 46) couvre au moins une région d'une surface à protéger (32) du composant (12, 14, 16, 24) et s'applique au moins partiellement contre la surface (32),
dans lequel l'organe protecteur comporte à titre de couche la plus extérieure une couche repoussant les saletés ou hydrophobe,
**caractérisé en ce que**
l'organe protecteur comporte une pluralité de nervures sacrifiées (30) qui dépassent depuis la surface (32).

2. Agencement de ressort pneumatique selon la revendication 1, **caractérisé en ce que** les nervures sacrifiées (30) sont agencées sensiblement parallèlement les unes par rapport aux autres.

3. Agencement de ressort pneumatique selon l'une des revendications précédentes, **caractérisé en ce que** l'organe protecteur comporte une surface structurée.

4. Agencement de ressort pneumatique selon l'une des revendications précédentes, **caractérisé en ce que** l'organe protecteur comporte une laque (42) d'un matériau résistant aux impacts et/ou élastique.

5. Agencement de ressort pneumatique selon l'une des revendications précédentes, **caractérisé en ce que** l'organe protecteur comprend un film (46) en un matériau résistant aux impacts et/ou élastique.

6. Agencement de ressort pneumatique selon l'une des revendications précédentes, **caractérisé en ce que** l'organe protecteur est agencé sur une surface de déroulement (38) d'un piston à déroulement (14).

7. Agencement de ressort pneumatique selon l'une des revendications précédentes, **caractérisé en ce que** l'organe protecteur est agencé sur une surface (32) d'un volume additionnel (24) de l'agencement de ressort pneumatique (10).

8. Agencement de ressort pneumatique selon l'une des revendications précédentes, **caractérisé en ce que** l'organe protecteur est réalisé de manière intégrale avec la surface extérieure (28) de l'un des composants (12, 14, 16, 24).

9. Agencement de ressort pneumatique selon l'une des revendications précédentes, **caractérisé en ce que** l'organe protecteur est réalisé en un matériau autre qu'un matériau de base du composant (12, 14, 16, 24) à la surface duquel (32) il est agencé.
